# EUROPEAN PATENT APPLICATION

(11) **EP 3 388 931 A1**
(43) Date of publication of application: **17.10.2018**
(21) Application number: 16852882.6
(22) Date of filing: 29.07.2016
(51) Int. Cl.: G06F 3/0484, H04M 1/725

(54) **METHOD OF CAPTURING CONTINUOUS SCREENSHOT OF PAGES ON BASIS OF MOBILE TERMINAL, SYSTEM AND MOBILE TERMINAL**

(30) Priority: 09.12.2015 CN 201510904164
(71) Applicant: Huizhou TCL Mobile Communication Co., Ltd., Hui Zhou Guangdong 516006 (CN)
(72) Inventor: PENG, Zhanfeng, HuiZhou Guangdong 516006 (CN); ZHAO, Long, HuiZhou Guangdong 516006 (CN)
(74) Representative: Petraz, Gilberto Luigi
(86) International application number: PCT/CN2016/092330
(87) International publication number: WO 2017/096924

(57) **Abstract**

The present disclosure provides a method for continuously screenshooting pages on a mobile terminal includes sliding a page, capturing and saving image of the slid page in real-time if NextScreen (NS) interface receives a signal of sliding a page to a next page on the mobile terminal. The slid image is stitched to form and display an image containing no repetition according to a preset image mosaic algorithm if SaveLongImage (SLI) interface receives the signal of saving a continuous screenshot.

## Description

### BACKGROUND

### 1. Field of the Invention

The present disclosure relates to field of mobile terminals, and more particularly, to a method, a system, and a mobile terminal for continuously screenshooting pages on a mobile terminal.

### 2. Description of the Prior Art

As smartphones have more and more functions, users place greater demand for usability and speed when using the smartphones and entering in an operational interface. At present, a common screenshot method in the smartphones is to capture an entire screen via hot keys (namely a power key and a volume down key) of the smartphone. Such a method is monotonous and can only capture an image of a single screen. If continuous pages need to be captured, it cannot be realized.

Therefore, the prior art needs to be improved and developed.

### SUMMARY OF THE DISCLOSURE

Based on deficiency of the prior art, the aim of the present disclosure is to provide a method, a system, and a mobile terminal for continuously screenshooting pages on the mobile terminal. The present disclosure provides a method for continuously screenshooting pages on an ANDRIOD operating system without providing any hardware cost to improve usability and speed of the application, which is convenient for a user.

The technical scheme of the present disclosure is as follow:

A method for continuously screenshooting pages on a mobile terminal comprising steps of:
S1: preestablishing a NextScreen (NS) interface receiving a signal of sliding a page to a next page and a SaveLongImage (SLI) interface receiving a signal of saving a continuous screenshot;
S2: starting the built-in screenshot software of the mobile terminal, sliding the page according to a preset page sliding distance, capturing and saving images of the slid page in real-time if the NS interface receives the signal of sliding the page to the next page;
S3: stitching the images of the slid page to form and display an image containing no repetition according to a preset image mosaic algorithm if the SLI interface receives the signal of saving the continuous screenshot.

In the method for continuously screenshooting pages on the mobile terminal, the S2 particularly comprises:
S21: displaying a floating widow prompting the continuous screenshot on the mobile terminal if the built-in screenshot software of the mobile terminal is detected to start;
S22: hiding the floating widow, capturing and saving an image of a current page on the mobile terminal if the NS interface receives the signal of sliding the page to the next page;
S23: determining whether the page of the mobile terminal is slidable downwards or not, sliding the page according to the preset page sliding distance, capturing and saving an image of a next page if the page of the mobile terminal is slidable;
S24: obtaining the signal of sliding the page to the next page received by the NS interface for a last time, and obtaining an actual sliding distance of a next page;
S25: determining that the page of the mobile terminal has been slid to a last page and prompting that the screenshot cannot be executed to the next page if the actual sliding distance of the next page is less than the preset page sliding distance; and
S26: saving all the images screenshot from the page according to a sequence of screenshotting, and displaying the floating window.

In the method for continuously screenshooting pages on the mobile terminal, the S3 particularly comprises:
S31: hiding the floating window if the SLI interface receives the signal of saving the continuous screenshot;
S32: capturing and saving the image of the current page on the mobile terminal to save; and
S33: obtaining the images of all pages saved in the mobile terminal, and determining whether the number N of sheets of the images of all pages is 1 or not; directly displaying the image of the page if the N is 1.

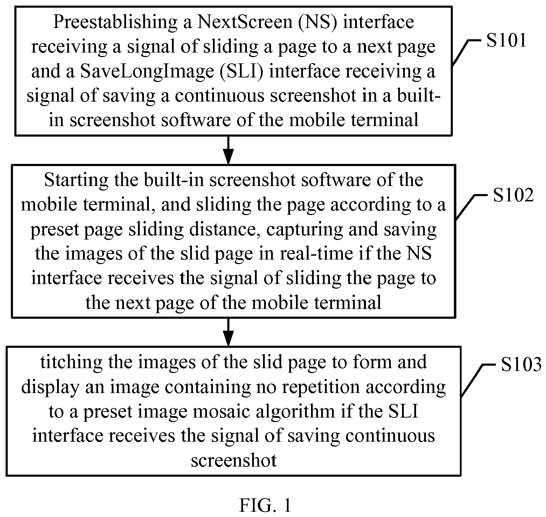

In the method for continuously screenshooting pages on the mobile terminal, the S3 further comprises:
S34: obtaining an image of a first page if the N is greater than 1, capturing and saving the image of the first page according to a method for removing a bottom predetermined fixing portion, and labeling as captured figure 1;
S35: obtaining an image of a last page, capturing and saving the image of the last page according to the method for removing the bottom predetermined fixing portion, and labeling as captured figure N;
S36: obtain an image of an i-th page, where 1<i<N, capturing and saving the image of the i-th page according to the preset page sliding distance and labeling as captured figure i; and
S37: stitching the captured figure 1, the captured figure i, and the captured figure N to form and display an image containing no repetition.

In the method for continuously screenshooting pages on the mobile terminal, the S2 particularly comprises: scrolling the screen by operating a topmost view of sending a simulative sliding operation if the NS interface receives the signal of sliding the page to the next page of the mobile terminal, sliding the page according to a preset page sliding distance, capturing and saving the images of the slid page in real-time.

In the method for continuously screenshooting pages on the mobile terminal, the S3 particularly comprises: capturing all slid page to generate the images of all slid page, and stitching the images of all slid page to form and display an image containing no repetition according to a preset image mosaic algorithm if the SLI interface receives the signal of saving the continuous screenshot.

A system for continuously screenshooting pages on the mobile terminal, comprises:
an interface preset module configured to preestablish a NextScreen (NS) interface receiving a signal of sliding a page to a next page and a SaveLongImage (SLI) interface receiving a signal of saving a continuous screenshot in a built-in screenshot software of the mobile terminal;
a page sliding module configured to start the built-in screenshot software of the mobile terminal, slide the page according to a preset page sliding distance, and capture and save images of the slid page in real-time if the NS interface receives the signal of sliding the page to the next page on the mobile terminal; and
an image stitching module configured to stitch the images of the slid page to form and display an image containing no repetition according to a preset image mosaic algorithm if the SLI interface receives the signal of saving the continuous screenshot.

In the system for continuously screenshooting pages on the mobile terminal, the page sliding module particularly comprises:
a floating widow displaying unit configured to prompt the continuous screenshot using a floating widow displayed on the mobile terminal if the built-in screenshot software in the mobile terminal is detected to start;
a page sliding signal receiving unit configured to hide the floating widow and capturing and saving an image of a current page on the mobile terminal to save if the NS interface receives the signal of sliding the page to the next page;
a next page capturing unit configured to determine whether the page of the mobile terminal is slidable downwards or not, slide the page according to the preset page sliding distance, capture and save an image of a next page image to save if the page of the mobile terminal is slidable;
an obtaining page distance unit configured to obtain the signal of sliding the page to the next page received by the NS interface for a last time, and obtaining an actual sliding distance of the next page;
a determining page slid to end unit configured to determine that the page of the mobile terminal has been slid to a last page and prompting that the screenshot cannot be executed to the next page if the actual sliding distance of the next page is less than the preset page sliding distance; and
a capturing and saving page unit configured to save all the images screenshot from the page according to a sequence of screenshotting, and display the floating window.

In the system for continuously screenshooting pages on the mobile terminal, the image stitching module particularly comprises:
a receiving captured signal unit configured to hide the floating window if the SLI interface receives the signal of saving the continuous screenshot;
a capturing current page unit configured to capture and save the image of the current page image on the mobile terminal; and
a first page displaying unit configured to obtain the images of all pages saved in the mobile terminal, and determining whether the number N of sheets of the images of all pages is 1 or not; directly displaying the image of the page if the N is 1.

In the system for continuously screenshooting pages on the mobile terminal, the image stitching module further comprises:
a first stitching unit configured to obtain an image of a first page if the N is greater than 1, capture and save the image of the first page according to a method for removing a bottom predetermined fixing portion, and label as captured figure 1;
a second stitching unit configured to obtain an image of a last page, capture and save the image of the last page image according to the method for removing the bottom predetermined fixing portion, and label as captured figure N;
a third stitching unit configured to obtain an image of an i-th page, capture and save the image of the i-th page to save according to the preset page sliding distance, and label as captured figure i, wherein 1 < i< N; and
a second page displaying unit configured to stitch the captured figure 1, the captured figure i, and the captured figure N to form and display an image containing no repetition.

In the system for continuously screenshooting pages on the mobile terminal, the page sliding module is configured to scroll the screen by operating a topmost view of sending a simulative sliding operation if the NS interface receives the signal of sliding the page to the next page on the mobile terminal, slide the page according to a preset page sliding distance, capture and save the images of the slid page in real-time.

In the system for continuously screenshooting pages on the mobile terminal, the image stitching module is configured to capture all slid page to generate the images of all slid page, and stitch the images of all slid page to form and display an image containing no repetition according to a preset image mosaic algorithm if the SLI interface receives the signal of saving the continuous screenshot.

A mobile terminal, comprise a system for continuously screenshooting pages on the mobile terminal, wherein the system for continuously screenshooting pages on the mobile terminal comprises:
an interface preset module configured to preestablish a NextScreen (NS) interface receiving a signal of sliding a page to a next page and a SaveLongImage (SLI) interface receiving a signal of saving a continuous screenshot in a built-in screenshot software of the mobile terminal;
a page sliding module configured to start the built-in screenshot software of the mobile terminal, slide the page according to a preset page sliding distance, and capture and save images of the slid page in real-time if the NS interface receives the signal of sliding the page to the next page on the mobile terminal; and;
an image stitching module configured to stitch the images of the slid page to form and display an image containing no repetition according to a preset image mosaic algorithm if the SLI interface receives the signal of saving the continuous screenshot.

In the mobile terminal, the page sliding module in the system for continuously screenshooting pages on the mobile terminal particularly comprises:
a floating widow displaying unit configured to prompt the continuous screenshot using a floating widow displayed on the mobile terminal if the built-in screenshot software of the mobile terminal is detected to start;
a page sliding signal receiving unit configured to hide the floating widow , capture and save an image of a current page image on the mobile terminal if the NS interface receives the signal of sliding the page to the next page;
a next page capturing unit configured to determine whether the page of the mobile terminal is slidable downwards or not, slide the page according to the preset page sliding distance, capture and save an image of a next page if the page of the mobile terminal is slidable;
an obtaining page distance unit configured to obtain the signal of sliding the page to the next page received by the NS interface for a last time, and obtaining an actual sliding distance of the next page;
a determining page slid to end unit configured to determine that the page of the mobile terminal has been slid to a last page and prompting that the screenshot cannot be executed to the next page if the actual sliding distance of the next page is less than the preset page sliding distance; and
a capturing and saving page unit configured to save the images screenshot from the page according to a sequence of screenshotting, and display the floating window.

In the mobile terminal, the image stitching module in the system for continuously screenshooting pages on the mobile terminal particularly comprises:
a receiving captured signal unit configured to hide the floating window if the SLI interface receives the signal of saving the continuous screenshot;
a capturing current page unit configured to capture and save the image of the current page on the mobile terminal; and
a first page displaying unit configured to obtain the images of all pages saved in the mobile terminal, and determining whether the number N of sheets of the images of all pages is 1 or not; directly displaying the image of the page if the N is 1

In the mobile terminal, the image stitching module in the system for continuously screenshooting pages on the mobile terminal further comprises:
a first stitching unit configured to obtain an image of a first page if the N is greater than 1, capture and save the image of the first page according to a method for removing a bottom predetermined fixing portion, and label as captured figure 1;
a second stitching unit configured to obtain an image of a last page, capture and save the image of the last page according to the method for removing the bottom predetermined fixing portion, and label as captured figure N;
a third stitching unit configured to obtain an image of an i-th page, capture and save the image of the i-th page according to the preset page sliding distance, and label as captured figure i, wherein 1<i<N; and
a second page displaying unit configured to stitch the captured figure 1, the captured figure i, and the captured figure N to form and display an image containing no repetition.

In the mobile terminal, the page sliding module is configured to scroll the screen by operating a topmost view of sending a simulative sliding operation if the NS interface receives the signal of sliding the page to the next page on the mobile terminal, slide the page according to a preset page sliding distance, capture and save the images of the slid page in real-time.

In the mobile terminal, the image stitching module is configured to capture all slid page to generate the images of all slid page, and stitch the images of all slid page to form and display an image containing no repetition according to a preset image mosaic algorithm if the SLI interface receives the signal of saving the continuous screenshot.

The present disclosure provides the method and a system for continuously screenshooting pages on a mobile terminal, and the mobile terminal. The method particularly comprises: preestablishing the NextScreen (NS) interface receiving the signal of sliding the page to the next page and the SaveLongImage (SLI) interface receiving the signal of saving continuous screenshot in the built-in screenshot software of the mobile terminal; starting the built-in screenshot software of the mobile terminal, and sliding the page according to a preset page sliding distance, capturing and saving image of the slid page in real-time if the NS interface receives the signal of sliding the page to the next page of the mobile terminal; stitching the images of the slid page to form and display an image containing no repetition according to a preset image mosaic algorithm if the SLI interface receives the signal of saving continuous screenshot. the simulative sliding operation is sent by the software operation to slide the interface that needs to be continuous captured, all slid interfaces finally keep in one image, where capturing process is that image of each screen is save and a whole image is finished according to the preset image mosaic algorithm. The above operation is transparent for the user, and the user only needs to slide the interface that needs to be continuous captured. The above method improves usability and speed of the application without increasing any hardware cost and is convenient for the user.

### BRIEF DESCRIPTION OF THE DRAWINGS

FIG. 1 is a flowchart of a method for continuously screenshooting pages on a mobile terminal of a preferred embodiment of the present disclosure.
FIG. 2 is a schematic diagram of mosaic algorithm of the method for continuously screenshooting pages on the mobile terminal of the present disclosure.
FIG. 3 is a schematic diagram of mosaic algorithm of the method for continuously screenshooting pages on the mobile terminal of the present disclosure.
FIG. 4 is a schematic diagram of mosaic algorithm of the method for continuously screenshooting pages on the mobile terminal of the present disclosure.
FIG. 5 is a schematic diagram of a functional module of the method for continuously screenshooting pages on the mobile terminal of the preferred embodiment of the present disclosure.
FIG. 6 is a schematic diagram of the functional module of the mobile terminal.

### DETAILED DESCRIPTION

The present disclosure provides a method, a system, and a terminal for continuously screenshooting pages on the mobile terminal. In order to more clearly illustrate aim, the technical scheme and effects of the present disclosure, the present disclosure will further be described in detail according to the drawing. It should be understood that the present disclosure has been described with reference to certain preferred and alternative embodiments which are intended to be exemplary only and do not limit the full scope of the present disclosure.

As shown in FIG. 1, FIG. 1 is a flowchart of a method for continuously screenshooting pages on a mobile terminal of a preferred embodiment of the present disclosure, where the method for continuously screenshooting pages on the mobile terminal in FIG. 1 comprises:
Step (S) 101: preestablishing a NextScreen (NS) interface receiving a signal of sliding a page to a next page and a SaveLongImage (SLI) interface receiving a signal of saving a continuous screenshot in a built-in screenshot software of the mobile terminal.

Namely, an embodiment of the present disclosure provides two user interfaces in the built-in screenshot software: the NextScreen (NS) interface is used to receive the signal of sliding the page to the next page and the SaveLongImage (SLI) interface is used to receive the signal of saving the continuous screenshot. To be specific, NextScreen represents scrolling the screen by operating a topmost view of sending a simulative sliding operation. SaveLongImage represents capturing the scroll range and stitching the scroll range to form an image containing no repetition. If the NextScreen does not be operated or the topmost view cannot scroll, the user directly operates SaveLongImage and directly saves content of a current screen.

Step(S)102: starting the built-in screenshot software of the mobile terminal, and sliding the page according to a preset page sliding distance, capturing and saving the images of the slid page in real-time if the NS interface receives the signal of sliding the page to the next page of the mobile terminal.

In the embodiment of the present disclosure, the Step(S)102 comprises:
S21: displaying a floating widow prompting the continuous screenshot on the mobile terminal if the built-in screenshot software of the mobile terminal is detected to start;
S22: hiding the floating widow, capturing and saving an image of a current page on the mobile terminal if the NS interface receives the signal of sliding the page to the next page in the mobile terminal;
S23: determining whether the page of the mobile terminal is slidable downwards or not; sliding the page according to the preset page sliding distance, capturing and saving an image of a next page image if the page of the mobile terminal is slidable;
S24: obtaining the signal of sliding the page to the next page received by the NS interface for a last time, and obtaining an actual sliding distance of a next page;
S25: determining that the page of the mobile terminal has been slid to a last page and prompting that the screenshot cannot be executed to the next page if the actual sliding distance of the next page is less than the preset page sliding distance; and
S26: saving all the images screenshot from the page according to a sequence of screenshotting, and displaying the floating window.

Step(S)103: stitching the images of the slid page to form and display an image containing no repetition according to a preset image mosaic algorithm if the SLI interface receives the signal of saving continuous screenshot.

In the embodiment of the present disclosure, the Step(S) 103 particularly comprises:
S31: hiding the floating window if the SLI interface receives the signal of saving continuous screenshot;
S32: capturing and saving the image of the current page on the mobile terminal;
S33: obtaining the images of all saved images saved in the mobile terminal, and determining whether the number N of sheets of the images of all pages is 1 or not; directly displaying the image of the page if the N is 1;
S34: obtaining an image of a first page if the N is greater than 1, capturing and saving the image of the first page according to a method for removing a bottom predetermined fixing portion, and labeling as captured figure 1;
S35: obtaining an image of a last page, capturing and saving the image of the last page according to the method for removing the bottom predetermined fixing portion, and labeling as captured figure N;
S36: obtain an image of an i-th page, where 1 < i < N, capturing and saving the image of the i-th page according to the preset page sliding distance, and labeling as captured figure i; and
S37: stitching the captured figure 1, the captured figure i, the captured figure N to form and display an image containing no repetition.

Namely, the present disclosure has three key technologies: (1) sliding distance for controlling the simulative sliding operation is constant, namely when the NextScreen is operated, the sliding distance of each screen is equal. (2) determining whether the page of the mobile terminal slides downwards or not, when a view cannot be slide or the view is slide downwards, it is necessary to remind the user about the sliding operation has been moved downwards, and the sliding operation of sliding to the next page cannot be continued any more. (3) mosaic algorithm of the image is achieved, when the user operates NextScreen many times, a plurality of the images are saved, when the user operates the SaveLongImage to save the images, the scroll range of the images should be saved, namely that a plurality of saved images are stitched together.

### 1. Operating NextScreen mainly comprises the following S:

When the user clicks NextScreen, the floating window is hidden, the system interface captures a current screen to save, a simulative sliding operation signal is sent to a current topmost view, and the current topmost view slides down. Since the software registers an interface for monitoring a feedback of the sliding operation before the software is initialized. When the simulative sliding operation occurs, if the software does not monitor any feedback, the View cannot scroll. If the software monitors the feedback, a related information of the last sliding operation should be obtained to determine whether the View scrolls downward, and the floating window is displayed after the sliding operation is accomplished.

### 2. Operating SaveLongImage mainly comprises the following S:

After the user operates the NextScreen many times, the user operates SaveLongImage, the floating window is hidden, the current screen is captured to save, all cache images are obtained, and images are stitched according to the mosaic algorithm of the image to save in one image, operation is finished and the floating window is displayed.

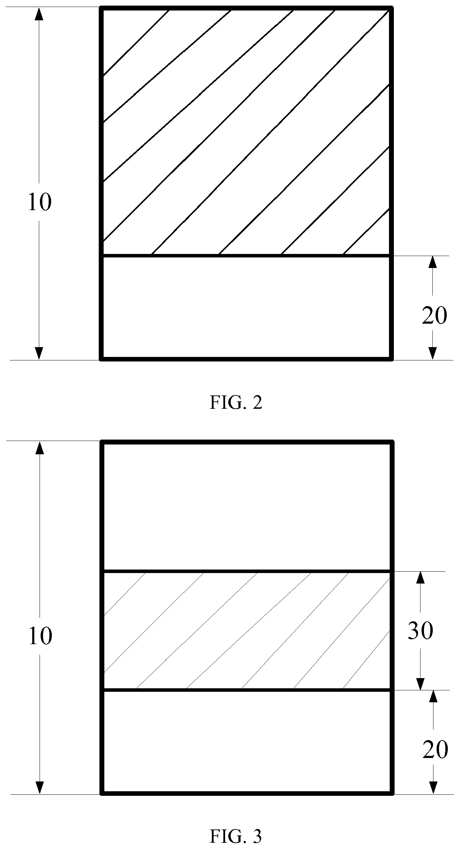

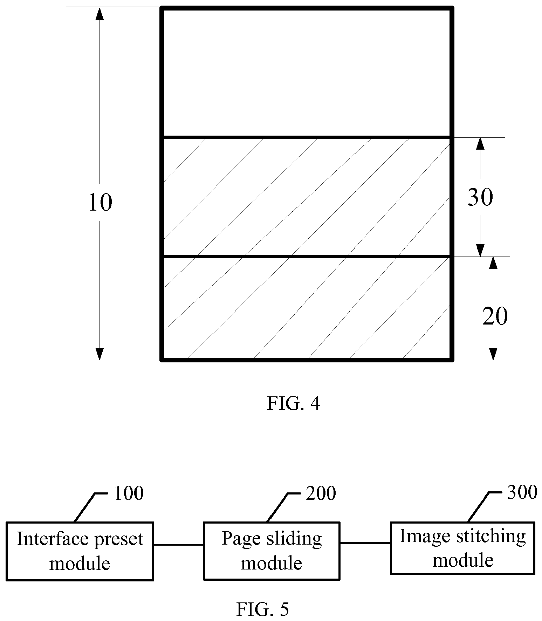

The mosaic algorithm of the image of the present disclosure will further be described in detail in accordance with the exemplary examples. As shown in FIG. 2, FIG. 3, and FIG. 4, where 10 represents a entire page, 20 represents a predetermined fixing portion (which avoids any fixed widget arranged at the bottom of the screen, and results in the captured screen existing repetitive parts), 30 represents the preset page sliding distance. FIG.2 represents a saved first image for mosaic algorithm. Namely the predetermined fixing portion 20 of image of the first page 10 is removed, and removed image of the first page image 10 is captured and saved, which is labeled as captured figure 1 (shaded hatched portion as shown in FIG. 2). FIG. 3 represents image of i-th page for mosaic algorithm (1<i<N, N represents number of the pages). Namely the image of the i-th page is captured and saved according to the preset page sliding distance, which is labeled as captured figure I (shaded hatched portion as shown in FIG. 3). FIG. 4 represents saved image of the last page N for mosaic algorithm. Namely, the image of the last page N is captured and saved according to the method for removing the bottom predetermined fixing portion and the preset page sliding distance, which is labeled as captured figure N (shaded hatched portion as shown in FIG. 4). The captured figure 1, the captured figure i, the captured figure N are stitched to form and display an image containing no repetition.

As the above, the simulative sliding operation is sent by the software operation to slide the interface that needs to be continuous captured, all slid interfaces finally reserve in one image, where capturing process is that the image of each screen is save and a entire image is finished according to the preset image mosaic algorithm. The above operation is transparent for the user, and the user only needs to slide the interface that needs to be continuous captured. The above method improves usability and speed of the application without increasing any hardware cost.

Based on the embodiment, the present disclosure provides a system for continuously screenshooting pages on a mobile terminal as shown in FIG. 5, comprises:
an interface preset module 100 configured to preestablish a NextScreen (NS) interface receiving a signal of sliding a page to a next page and a SaveLongImage (SLI) interface receiving a signal of saving continuous screenshot in a built-in screenshot software of the mobile terminal; the specific is described as the above;
a page sliding module 200 configured to start the built-in screenshot software of the mobile terminal, and slide the page according to a preset page sliding distance, and capture and save images of the slid page in real-time if the NS interface receives the signal of sliding the page to the next page; the specific is described as the above; and
an image stitching module 300 configured to stitch the images of the slid page to form and display an image containing no repetition according to a preset image mosaic algorithm if the SLI interface receives the signal of saving continuous screenshot, the specific is described as the above;.

Furthermore, the page sliding module 200 particularly comprises:
a floating widow displaying unit configured to prompt the continuous screenshot using a floating widow displayed on the mobile terminal if the built-in screenshot software of the mobile terminal is detected to start; the specific is described as the above;
a page sliding signal receiving unit configured to hide the floating widow capture and save an image of a current page on the mobile terminal if the NS interface receives the signal of sliding the page to the next page; the specific is described as the above;
a next page capturing unit configured to determine whether the page of the mobile terminal is slidable downwards or not, slide the page according to the preset page sliding distance, capture and save an image of a next page if the page of the mobile terminal is slidable; the specific is described as the above;
an obtaining page distance unit configured to obtain the signal of sliding the page to the next page received by the NS interface for the last time, and obtain an actual sliding distance of the next page; the specific is described as the above
a determining page slid to end unit configured to determine that the page of the mobile terminal has been slid to a last page and prompting that the screenshot cannot be executed to the page if the actual sliding distance of the next page is less than the preset page sliding distance; the specific is described as the above, and
a capturing and saving page unit configured to save the images screenshot from the page according to a sequence of screenshotting, and display the floating window, the specific is described as the above.

Furthermore, the image stitching module 300 particularly comprises:
a receiving captured signal unit configured to hide the floating window if the SLI interface receives the signal of saving continuous screenshot; the specific is described as the above;
a capturing current page unit configured to capture and save the image of the current page image on the mobile terminal; the specific is described as the above;
a first page displaying unit configured to obtain the images of all pages saved in the mobile terminal, and determining whether the number N of sheets of the images of all pages is 1 or not; directly displaying the image of the page if the N is 1; the specific is described as the above;
a first stitching unit configured to obtain an image of a first page if the N is greater than 1, capture and save the image of the first page according to a method for removing a bottom predetermined fixing portion, and label as captured figure 1; the specific is described as the above;
a second stitching unit configured to obtain an image of a last page, capture and save the image of the last page according to the method for removing the bottom predetermined fixing portion, and label as captured figure N; the specific is described as the above;
a third stitching unit configured to obtain an image of an i-th page, where 1<i<N, capture and save the image of the i-th page according to the preset page sliding distance, and label as captured figure i; the specific is described as the above, and
a second page displaying unit configured to stitch the captured figure 1, the captured figure i, and the captured figure N to form and display an image containing no repetition; the specific is described as the above.

Furthermore, the present disclosure provides a mobile terminal comprising any one of the above system for continuously screenshooting pages on the mobile terminal.

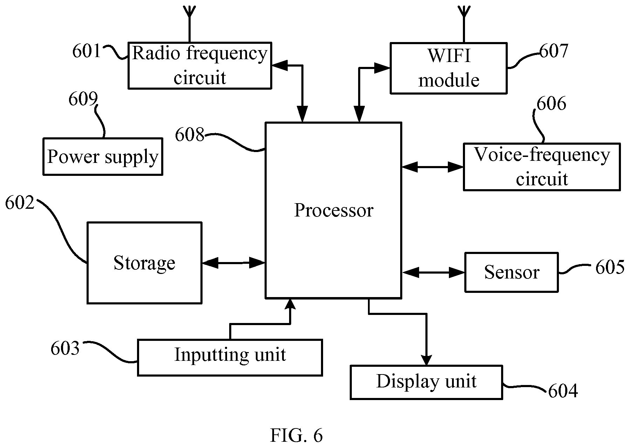

As shown in FIG. 6, the mobile terminal can comprise a radio frequency circuit 601, one or more storages 602 of computer readable storage mediums, an inputting unit 603, a display unit 604, a sensor 605, a voice-frequency circuit 606, a WIFI module 607, one or more processors 608, and a power supply 609. A person skilled in the art should understand, structure of the mobile terminal as shown in FIG. 6 is not limited to the mobile terminal, namely the mobile terminal can comprise more or less components than the components as shown in FIG. 6, or some components are combined, or different components are arranged.

A person skilled in the art should understand and achieve that the above embodiment and some flowchart of the present disclosure are controlled by computer program to complete. The computer program may be stored in a computer readable storage medium, such as the computer program is stored in a memory of the smart watch, and the computer program is performed by at least one processor in the smart watch, which includes any above method of the embodiment of the present disclosure in the performing. The computer readable storage medium is a diskette, an optical disk, a read-only memory, or a random access memory.

As the above, the present disclosure provides the method and a system for continuously screenshooting pages on a mobile terminal, and the mobile terminal. The method particularly comprises: preestablishing the NextScreen (NS) interface receiving the signal of sliding the page to the next page and the SaveLongImage (SLI) interface receiving the signal of saving continuous screenshot in the built-in screenshot software of the mobile terminal; starting the built-in screenshot software of the mobile terminal, and sliding the page according to a preset page sliding distance, capturing and saving image of the slid page in real-time if the NS interface receives the signal of sliding the page to the next page of the mobile terminal; stitching slid image to form and display an image containing no repetition according to a preset image mosaic algorithm if the SLI interface receives the signal of saving continuous screenshot. the simulative sliding operation is sent by the software operation to slide the interface that needs to be continuous captured, all slid interfaces finally keep in one image, where capturing process is that image of each screen is save and a whole image is finished according to the preset image mosaic algorithm. The above operation is transparent for the user, and the user only needs to slide the interface that needs to be continuous captured. The above method improves usability and speed of the application without increasing any hardware cost and is convenient for the user.

It should be understood that present disclosure is not limited to the exemplary examples. Person skilled in the art should understand and achieve that equivalent replacement and improvement is according to the above description. The equivalent replacements and improvements should be considered to belong to the protection scope of the present disclosure.

## Claims

1. A method for continuously screenshooting pages on a mobile terminal comprising steps of:
S1: preestablishing a NextScreen (NS) interface receiving a signal of sliding a page to a next page to scroll the page, and a SaveLongImage (SLI) interface receiving a signal of saving a continuous screenshot to capture and stitch images within a scroll range in a built-in screenshot software of the mobile terminal;
S2: starting the built-in screenshot software of the mobile terminal; sliding the page according to a preset page sliding distance, capturing and saving images of the slid page in real-time if the NS interface receives the signal of sliding the page to the next page;
S3: determining whether S2 has been executed or not if the SLI interface receives the signal of saving the continuous screenshot; stitching the images of the slid page to form and display an image containing no repetition according to a preset image mosaic algorithm if S2 has been executed; while, saving an image of a current screen if S2 has not been executed.

2. The method for continuously screenshooting pages on the mobile terminal as claimed in claim 1, wherein the S2 particularly comprises:
S21: displaying a floating widow prompting the continuous screenshot on the mobile terminal if the built-in screenshot software of the mobile terminal is detected to start;
S22: hiding the floating widow, capturing and saving an image of the current page on the mobile terminal if the NS interface receives the signal of sliding the page to the next page;
S23: determining whether the page of the mobile terminal is slidable downwards or not, sliding the page according to the preset page sliding distance, capturing and saving an image of a next page if the page of the mobile terminal is slidable;
S24: obtaining the signal of sliding the page to the next page received by the NS interface for a last time, and obtaining an actual sliding distance of a next page;
S25: determining that the page of the mobile terminal has been slid to a last page and prompting that the screenshot cannot be executed to the next page if the actual sliding distance of the next page is less than the preset page sliding distance; and
S26: saving all the images screenshot from the page according to a sequence of screenshotting, and displaying the floating window.

3. The method for continuously screenshooting pages on the mobile terminal as claimed in claim 2, wherein the S3 particularly comprises:
S31: hiding the floating window if the SLI interface receives the signal of saving the continuous screenshot;
S32: capturing and saving the image of the current page on the mobile terminal; and
S33: obtaining the images of all pages saved in the mobile terminal, and determining whether the number N of sheets of the images of all pages is 1 or not; directly displaying the image of the page if the N is 1.

4. The method for continuously screenshooting pages on the mobile terminal as claimed in claim 3, wherein the S3 further comprises:
S34: obtaining an image of a first page if the N is greater than 1, capturing and saving the image of the first page according to a method for removing a bottom predetermined fixing portion, and labeling as captured figure 1;
S35: obtaining an image of a last page, capturing and saving the image of the last page according to the method for removing the bottom predetermined fixing portion, and labeling as captured figure N;
S36: obtain an image of an i-th page, capturing and saving the image of the i-th page according to the preset page sliding distance, and labeling as captured figure i; wherein 1 < i < N, and
S37: stitching the captured figure 1, the captured figure i, and the captured figure N to form and display an image containing no repetition.

5. The method for continuously screenshooting pages on the mobile terminal as claimed in claim 1, wherein the S2 particularly comprises:
scrolling the screen by operating a topmost view of sending a simulative sliding operation if the NS interface receives the signal of sliding the page to the next page on the mobile terminal, sliding the page according to a preset page sliding distance, capturing and saving the images of the slid page in real-time.

6. The method for continuously screenshooting pages on the mobile terminal as claimed in claim 1, wherein the S 3 particularly comprises:
capturing all slid page to generate the images of all slid page, and stitching the images of all slid page to form and display an image containing no repetition according to a preset image mosaic algorithm if the SLI interface receives the signal of saving the continuous screenshot.

7. A system for continuously screenshooting pages on a mobile terminal, comprising:
an interface preset module configured to preestablish a NextScreen (NS) interface receiving a signal of sliding a page to a next page and a SaveLongImage (SLI) interface receiving a signal of saving a continuous screenshot in a built-in screenshot software of the mobile terminal;
a page sliding module configured to start the built-in screenshot software of the mobile terminal, slide the page according to a preset page sliding distance, and capture and save images of the slid page in real-time if the NS interface receives the signal of sliding the page to the next page on the mobile terminal; and
an image stitching module configured to stitch the images of the slid page to form and display an image containing no repetition according to a preset image mosaic algorithm if the SLI interface receives the signal of saving the continuous screenshot.

8. The system for continuously screenshooting pages on the mobile terminal as claimed in claim 7, the page sliding module particularly comprises:
a floating widow displaying unit configured to prompt the continuous screenshot using a floating widow displayed on the mobile terminal if the built-in screenshot software in the mobile terminal is detected to start;
a page sliding signal receiving unit configured to hide the floating widow and capturing and saving an image of a current page on the mobile terminal to save if the NS interface receives the signal of sliding the page to the next page;
a next page capturing unit configured to determine whether the page of the mobile terminal is slidable downwards or not, slide the page according to the preset page sliding distance, capture and save an image of a next page if the page of the mobile terminal is slidable;
an obtaining page distance unit configured to obtain the signal of sliding the page to the next page received by the NS interface for a last time, and obtaining an actual sliding distance of the next page;
a determining page slid to end unit configured to determine that the page of the mobile terminal has been slid to a last page and prompting that the screenshot cannot be executed to the next page if the actual sliding distance of the next page is less than the preset page sliding distance; and
a capturing and saving page unit configured to save the images screenshot from the page according to a sequence of screenshotting, and display the floating window.

9. The system for continuously screenshooting pages on the mobile terminal as claimed in claim 8, wherein the image stitching module particularly comprises:
a receiving captured signal unit configured to hide the floating window if the SLI interface receives the signal of saving the continuous screenshot;
a capturing current page unit configured to capture and save the image of the current page on the mobile terminal; and
a first page displaying unit configured to obtain the images of all pages saved in the mobile terminal, and determining whether the number N of sheets of the images of all pages is 1 or not; directly displaying the image of the page if the N is 1.

10. The system for continuously screenshooting pages on the mobile terminal as claimed in claim 9, wherein the image stitching module further comprises:
a first stitching unit configured to obtain an image of a first page if the N is greater than 1, capture and save the image of the first page according to a method for removing a bottom predetermined fixing portion, and label as captured figure 1;
a second stitching unit configured to obtain an image of a last page, capture and save the image of the last page according to the method for removing the bottom predetermined fixing portion, and label as captured figure N;
a third stitching unit configured to obtain an image of an i-th page, capture and save the image of the i-th page according to the preset page sliding distance, and label as captured figure i, wherein 1 < i< N; and
a second page displaying unit configured to stitch the captured figure 1, the captured figure i, and the captured figure N to form and display an image containing no repetition.

11. The system for continuously screenshooting pages on the mobile terminal as claimed in claim 7, wherein the page sliding module is configured to scroll the screen by operating a topmost view of sending a simulative sliding operation if the NS interface receives the signal of sliding the page to the next page on the mobile terminal, slide the page according to a preset page sliding distance, capture and save the images of the slid page in real-time.

12. The system for continuously screenshooting pages on the mobile terminal as claimed in claim 7, wherein the image stitching module is configured to capture all slid page to generate the images of all slid page, and stitch the images of all slid page to form and display an image containing no repetition according to a preset image mosaic algorithm if the SLI interface receives the signal of saving the continuous screenshot.

13. A mobile terminal, comprising a system for continuously screenshooting pages on the mobile terminal, wherein the system for continuously screenshooting pages on the mobile terminal comprises:
an interface preset module configured to preestablish a NextScreen (NS) interface receiving a signal of sliding a page to a next page and a SaveLongImage (SLI) interface receiving a signal of saving a continuous screenshot in a built-in screenshot software of the mobile terminal;
a page sliding module configured to start the built-in screenshot software of the mobile terminal, slide the page according to a preset page sliding distance, and capture and save images of the slid page in real-time if the NS interface receives the signal of sliding the page to the next page on the mobile terminal; and;
an image stitching module configured to stitch the images of the slid page to form and display an image containing no repetition according to a preset image mosaic algorithm if the SLI interface receives the signal of saving the continuous screenshot.

14. The mobile terminal as claimed in claim 13, the page sliding module in the system for continuously screenshooting pages on the mobile terminal particularly comprises:
a floating widow displaying unit configured to prompt the continuous screenshot using a floating widow displayed on the mobile terminal if the built-in screenshot software of the mobile terminal is detected to start;
a page sliding signal receiving unit configured to hide the floating widow, capture and save an image of a current page on the mobile terminal if the NS interface receives the signal of sliding the page to the next page;
a next page capturing unit configured to determine whether the page of the mobile terminal is slidable downwards or not, slide the page according to the preset page sliding distance, capture and save an image of a next page if the page of the mobile terminal is slidable;
an obtaining page distance unit configured to obtain the signal of sliding the page to the next page received by the NS interface for a last time, and obtaining an actual sliding distance of the next page;
a determining page slid to end unit configured to determine that the page of the mobile terminal has been slid to a last page and prompting that the screenshot cannot be executed to the next page if the actual sliding distance of the next page is less than the preset page sliding distance; and
a capturing and saving page unit configured to save the images screenshot from the page according to a sequence of screenshotting, and display the floating window.

15. The mobile terminal as claimed in claim 14, wherein the image stitching module in the system for continuously screenshooting pages on the mobile terminal particularly comprises:
a receiving captured signal unit configured to hide the floating window if the SLI interface receives the signal of saving the continuous screenshot;
a capturing current page unit configured to capture and save the image of the current page on the mobile terminal; and
a first page displaying unit configured to obtain the images of all pages saved in the mobile terminal, and determining whether the number N of sheets of the images of all pages is 1 or not; directly displaying the image of the page if the N is 1.

16. The mobile terminal as claimed in claim 15, wherein the image stitching module in the system for continuously screenshooting pages on the mobile terminal further comprises:
a first stitching unit configured to obtain an image of a first page if the N is greater than 1, capture and save the image of the first page according to a method for removing a bottom predetermined fixing portion, and label as captured figure 1;
a second stitching unit configured to obtain an image of a last page, capture and save the image of the last page according to the method for removing the bottom predetermined fixing portion, and label as captured figure N;
a third stitching unit configured to obtain an image of an i-th page image, capture and save the image of the i-th page according to the preset page sliding distance, and label as captured figure i, wherein 1<i<N; and
a second page displaying unit configured to stitch the captured figure 1, the captured figure i, and the captured figure N to form and display an image containing no repetition.

17. The mobile terminal as claimed in claim 13, wherein the page sliding module is configured to scroll the screen by operating a topmost view of sending a simulative sliding operation if the NS interface receives the signal of sliding the page to the next page on the mobile terminal, slide the page according to a preset page sliding distance, capture and save the images of the slid page in real-time.

18. The mobile terminal as claimed in claim 13, wherein the image stitching module is configured to capture all slid page to generate the images of all slid page, and stitch the images of all slid page to form and display an image containing no repetition according to a preset image mosaic algorithm if the SLI interface receives the signal of saving the continuous screenshot.
